Europäisches Patentamt

European Patent Office

Office européen des brevets

(19)

(11) Publication number: **0 000 992**
**B1**

# (12) EUROPEAN PATENT SPECIFICATION

(45) Date of publication of patent specification: **10.03.82**

(51) Int. Cl.³: **F 28 F 21/00, F 24 J 3/02**

(21) Application number: **78300274.4**

(22) Date of filing: **10.08.78**

(54) Heat transfer elements and method for the manufacture of such elements.

(30) Priority: **11.08.77 GB 3366277**

(43) Date of publication of application:
**07.03.79 Bulletin 79/5**

(45) Publication of the grant of the patent:
**10.03.82 Bulletin 82/10**

(84) Designated Contracting States:
**BE CH DE FR LU NL SE**

(56) References cited:
**GB - A - 656 811**
**GB - A - 1 302 516**
**US - A - 3 236 294**
**US - A - 3 825 063**

(73) Proprietor: **United Wire Group Limited**
**Granton Park Avenue**
**Edinburgh EH5 1HT (GB)**

(72) Inventor: **United Wire Group Limited**
**Granton Park Avenue**
**Edinburgh EH5 1HT (GB)**

(74) Representative: **Arthur, John William et al,**
**FITZPATRICKS 48 St. Vincent Street**
**Glasgow G2 5TT Scotland (GB)**

Courier Press, Leamington Spa, England.

Heat transfer elements and method for the manufacture of such elements

The present invention relates to heat transfer elements, and particularly to heat transfer panels or tubes serving for the conduction of heat on either side thereof.

More particularly, the present invention concerns an improvement of previous composite type heat transfer elements which comprised a composite wall member having portions made from materials of different thermal conductivity. Such an element is shown in US—A—1734274 wherein the portion of higher thermal conductivity comprises a wire mesh extending transversely through the wall: with this arrangement the transversely extending higher thermal conductivity material serves for cross-transfer of the bulk of the heat while the other portion having lower thermal conductivity serves basically as the barrier layer between the zones of the heat-exchange fluids. The lower thermal conductivity portion can be of considerably cheaper material, e.g. plastics, than the transverse portion which may be for example of copper or a noble metal.

The present invention is characterised by said closure layer extending in the same plane as the mesh with the mesh embedded in the layer, said mesh having transverse width sufficient for heat to be transferred by the mesh from one outer surface of the closure layer transversely across the layer to the other outer surface of the layer.

A material of superior thermal conductivity is preferably chosen for the mesh. In particular, the thermal conductivity K(gramme calories cm. per sec. per square centimetre per °C) should be greater than 0.18 and preferably at least 0.20. Preferably, the mesh is in the form of a woven mesh: the undulating effect of the "warp" (and the weft) of the weave will impart the desired transverse extent to the mesh. As an alternative a plain cross-laid mesh could be used, with the mesh strands secured at the interstices for example by bonding.

In one preferred embodiment, the closure layer constitutes a core layer and the mesh is embedded therein. Thin covering layers could be applied to either side of the core layer. With this arrangement (since the mesh is slightly beneath the outer surfaces of the wall member) the mesh is protected from any corrosive effects of heat exchange fluids. However, the coatings could be made porous to deter the build-up of fouling films on the panel surfaces.

In an alternative embodiment, the closure layer consitutes a filler layer closing the spaces in the mesh, the mesh projecting laterally from at least one side of the filler layer to present good heat conducting surfaces. The mesh will therefore be in direct contact with a heat exchange fluid through these heat conducting surfaces, but the laterally projecting mesh portions will create a turbulant effect which should assist the heat transfer performance of the panel.

According to a further aspect of the present invention a heat-exchange ducting panel is characterised by a heat conducting mesh core of metal bounded on either side by closure layers of plastics material, so that a longitudinal fluid channel is provided between the closure layers, the mesh core permitting longitudinal fluid flow in said channel between the closure layers and having outer portions embedded in the plastics closure layers whereby heat is transferred by the mesh from the outer surface of one layer to the channel for heat exchange with fluid flowing therein.

Embodiments of the present invention will now be described by way of example with reference to the accompanying drawings in which:—

Fig. 1 shows a schematic view of a heat exchange panel according to one embodiment of the present invention;

Fig. 2 shows a schematic view of a heat exchange panel according to a second embodiment of the present invention;

Fig. 3 shows a heat ducting wall for use in a solar energy panel;

Fig. 4 shows a fluid circuit of a solar energy system and including a heat ducting wall according to the present invention; and

Figs. 5 and 6 show end views of modified heat exchange panels.

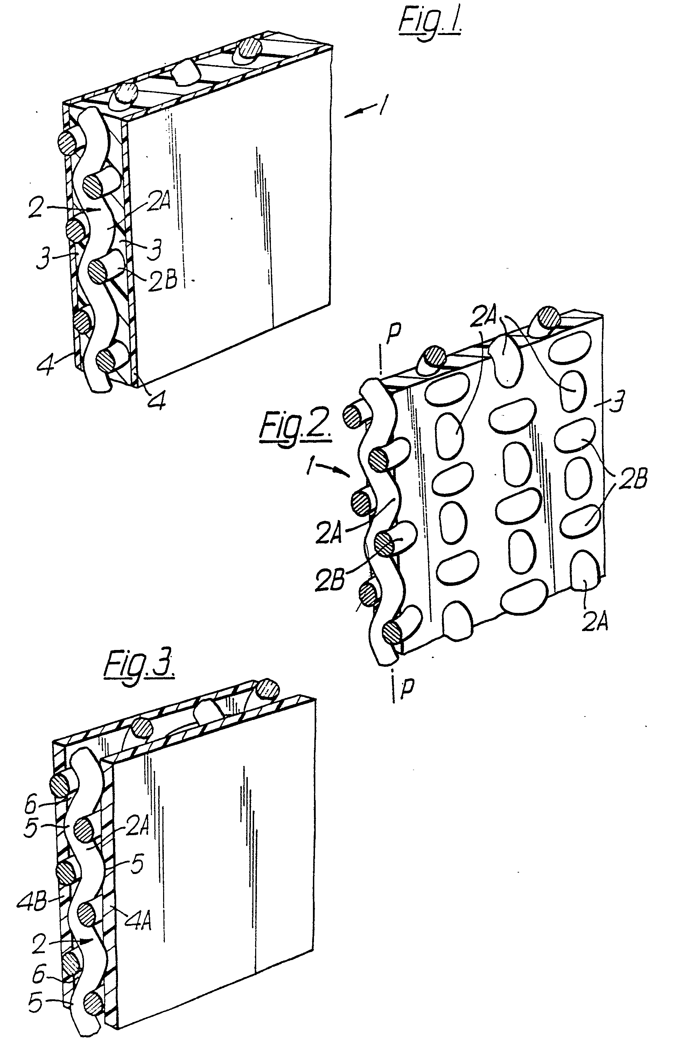

Referring to Fig. 1, by way of example, a heat transfer panel or wall portion 1 has a metal/plastics matrix comprising a woven (or knitted) openwork wire mesh 2 embedded in a plastics core layer 3. In this example, the mesh 2 is made from strands of copper, but aluminium, nickel, bronze or other strand material of high thermal conductivity could be used; and the core layer 3 is a thermoplastic or thermosetting plastics having suitable flexibility to permit thermal stressing during operation of the panel. The plastics should be able to withstand the highest operational temperature. A urethane or other elastomer is a suitable material for the core layer. The plastics can be applied in the molten state to the woven mesh 2 or alternatively the mesh 2 can be immersed or dipped in a bath of molten plastics material: in both cases the plastics closes the spaces of the mesh 2.

The undulating "warp" strands 2A (and also the undulating weft strands 2B) of the woven mesh 2 extend transversely across the depth of the matrix 1 to or substantially to the outer surfaces of the matrix. To ensure that the mesh is fully embedded, thin polyester coating layers 4 say of 0.1 mm thickness are applied to the outer surfaces of the matrix 1. It will be understood that other plastics material could be used for the coatings 4. The wire mesh 2 is thus shielded from any corrosive effects of the heat exchange fluids, but the outer coatings 4 may be made porous to deter the buildup of fouling films on the panel surfaces, particularly if a copper mesh is used. The thermal conductivity K should be 0.2 or more.

By way of example, a 30 mesh plain weave wire mesh could be used with 0.28 mm diameter wire, so that 18.75% of the normal area of the panel is provided by the mesh with the balance (81.25%) made up by the plastics core. In operation, the metal mesh 2 conducts heat across the depth of the panel, for heat exchange between fluids on either side of the panel. The above panel should have a heat transfer performance superior to that of a similarly dimensioned steel sheet panel.

The flat panel can be formed with the outer surfaces having a corrugated, ridged or other patterned effect: but the whole panel could be corrugated uniformally and set in the required form. The panel could be rolled and closed to form a tube (with or without corrugations etc.,), or alternatively the panel in strip form and prior to curing could be wound helically on a mandrel and allowed to set to form a tube. Mesh is generally formed in elongate strips or bands and an initial metal/plastics matrix could be formed 2 metres wide and 1000 metres long. If a suitable plastics is chosen for the matrix, then the metal/plastics matrix may be conveniently machined or cold worked.

In the second embodiment of the present invention shown in Fig. 2, the metal/plastics matrix 1 is formed substantially as before and so that there is provided a plastics barrier in the mid-plane P—P of the matrix, but in this case the warp 2A of the woven mesh projects laterally from the side surfaces of the plastics barrier 3 and also parts of the "weft" 2B are exposed. The mesh 2 will therefore be exposed to the heat exchange fluids via good heat conducting surfaces: it may be desirable however, to treat the mesh to mitigate any corrosion effects of the fluids. However, the projecting mesh will create a turbulent effect at the panel surfaces and this should assist the panel's heat exchange performance. It would be possible to have the mesh 2 project from only one surface of the plastics barrier layer.

The above heat exchange panels or walls can be used in a wide variety of heat exchangers, and will be particularly suitable for use in desalination apparatus. The panels could be advantageously used in the manufacture of radiators, particularly domestic radiators due to the relatively inexpensive construction of the panel.

The further embodiment of the present invention shown in Fig. 3 is particularly intended for use in solar energy systems. In this embodiment a ducting panel 1 comprises a central core constituted by an openwork woven mesh 2 of high thermal conductivity strands e.g.

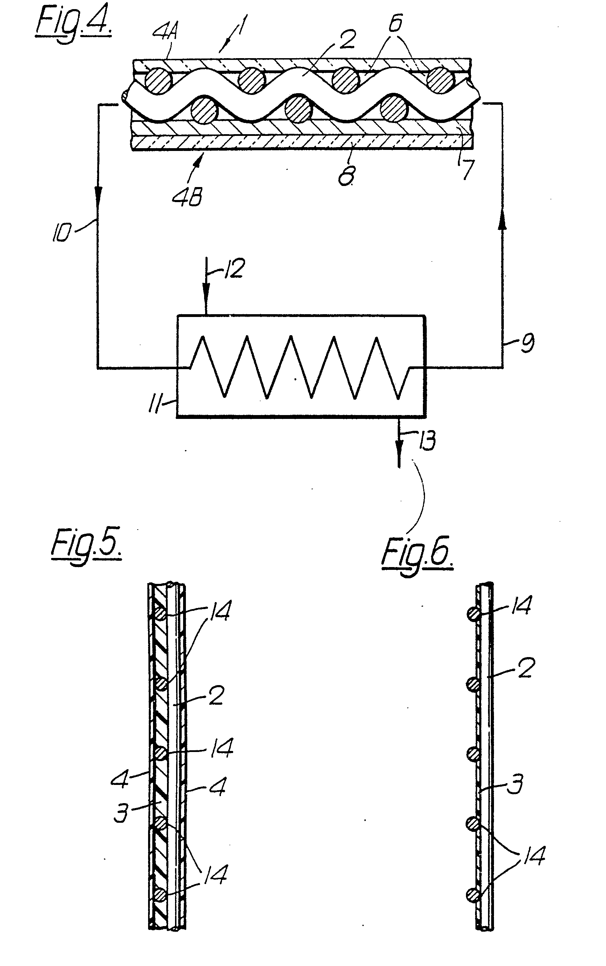

copper, and plastics closure layers 4A, 4B located at opposed sides of the mesh 2 with the nodes 5 of the mesh warp 2 embedded in the plastics layers 4A, 4B to bond the layers to the mesh. Thus a central duct 6 is formed between the layers 4A, 4B with the mesh warp 2A extending longitudinally in this duct. At least one of the layers i.e. layer 4A exposed to the sunlight is highly absorbent to radiant energy. In operation, the highly absorbent layer 4A picks up heat energy of the sun rays. This heat is conducted from the surface by the mesh 2, and heat exchange fluid (liquid, or air or gas) flowing longitudinally in the central duct 6 is consequently heated. In a modification (Fig. 4) the layer 4A exposed to the sunlight comprises a transparent or translucent plastics layer, while the other closure layer 4B comprises a double-layer 7/8 one layer 7 of which is a heat absorbent layer adjacent the mesh 2 covered by an outer insulating layer 8.

Fig. 4 shows the fluid heating circuit of the solar energy system: this circuit includes a recirculation line 9, 10 for the flow of heat exchange fluid between a heat exchanger 11 and the duct 6 of panel 1. This recirculating fluid serves to heat a secondary fluid in the heat exchanger 11 which is supplied and discharged via lines 12 and 13 respectively. The ducting panel 1 of Figs. 3 (and 4) is particularly intended for use with a recirculating heat exchange liquid or fluid having a dark colour characteristic giving good heat absorbent properties. A particularly suitable heat exchange fluid of this type comprises a colloidal suspension of liquid (e.g. water) with fine carbon black particles: this may be referred to as "black water".

Further modifications are of course possible in the various embodiments. For example, the mesh could be formed from a plain cross-laid array of strands (as shown in Figs. 5 and 6) with the interstices 14 of the mesh 2 secured for example by bonding.

In Fig. 5 the mesh 2 is embedded in a plastics core to form a matrix and plastics covering layers 4 cover the matrix as in Fig. 1, while in Fig. 6 the openwork of the mesh 2 is simply closed by a plastics filler layer 3 with the mesh presenting lateral projecting portions of good heat conducting property as in Fig. 2. In the embodiments of Figs. 1 and 5 a metal coating could be applied to the metal/plastics matrix.

The present invention therefore provides a heat exchange panel or duct which will exhibit a very satisfactory heat exchange performance due to the high thermal conductivity mesh but which can be relatively inexpensive to manufacture since the bulk of the panel is made from less costly plastics material.

## Claims

1. A heat transfer element including a composite wall member made from portions of different thermal conductivity, one portion (2) of higher thermal conductivity comprising a metal mesh of strip or strands while a further wall portion (3) of lower thermal conductivity plastics material constitutes a closure layer characterised in that said closure layer (3) extends in the same plane as the mesh (2) with the mesh (2) embedded in the layer (3), said mesh (2) having transverse width sufficient for heat to be transferred by the mesh (2) from one outer surface of the closure layer (3) transversely across the layer to the other outer surface of the layer (3).

2. A heat transfer element as claimed in Claim 1, characterised in that the metal mesh (2) is copper, aluminium, nickel or bronze.

3. A heat transfer element as claimed in Claim 1 or 2, characterised in that the plastics material closure layer (3) is a urethane.

4. A heat transfer element as claimed in Claim 1, characterised in that the mesh (2) is in the form of a woven mesh.

5. A heat transfer element as claimed in Claim 1, characterised in that the mesh (2) is a plain cross-laid mesh.

6. A heat transfer element as claimed in Claim 1, characterised in that the closure layer (3) constitutes a core layer and the mesh (2) is embedded therein.

7. A heat transfer element as claimed in Claim 6, characterised in that a covering layer (4) is applied to at least one side of the core layer (3).

8. A heat transfer element as claimed in Claim 6, characterised in that the covering layer (4) is porous.

9. A heat transfer element as claimed in Claim 2, wherein the closure layer (3) constitutes a filler layer closing the spaces in the mesh (2), the mesh (2) projecting laterally (2A, 2B) from at least one side of the filler layer (3) to present good heat conducting surfaces.

10. A heat exchange panel characterised by comprising a heat conducting mesh core (5) of metal bounded on either side by closure layers (4A, 4B) of plastics material, so that a longitudinal fluid channel (6) is provided between the closure layers (4A, 4B), the mesh core (5) permitting longitudinal fluid flow in said channel (6) between the closure layers (4A, 4B) and having outer portions embedded in the plastics closure layers (4A, 4B) whereby heat is transferred by the mesh (5) from the outer surface of one layer (4A, 4B) to the channel (6) for heat exchange with fluid flowing therein.

11. A panel as claimed in Claim 10, characterised in that the mesh core comprises a woven mesh.

12. A panel as claimed in Claim 10, characterised in that one (4A) of the closure layers (4A, 4B) is absorbent to radiant energy to enable the panel to be used as a solar energy panel.

## Revendications

1. Un élément conducteur de chaleur comprenant une cloison composite faite d'éléments présentant une conductibilité calorifique différente, dont un élément (2) à conductibilité plus élevée constitué par un treillis de fils ou lanières métalliques, et un autre élément de cloison (3) à conductibilité calorifique moins élevée en matière plastique qui constitue une couche protectrice (3) dont la caractéristique est d'être située sur le même plan que le treillis (2), ledit treillis (2) étant noyé dans cette couche (3), et le treillis (2) possédant une épaisseur transversale telle que la chaleur puisse être transmise par le treillis (2) d'une surface externe de la couche protectrice (3) à travers ladite couche à l'autre surface externe de la couche protectrice (3).

2. Un élément conducteur de chaleur selon la revendication 1, caractérisé en ce que le treillis métallique est fait de cuivre, d'aluminium, de nickel ou de bronze.

3. Un élément conducteur de chaleur selon la revendication 1 ou 2, caractérisé en ce que la couche protectrice en matière plastique est faite d'uréthane.

4. Un élément conducteur de chaleur selon la revendication 1, caractérisé en ce que le treillis (2) se présente sous la forme d'un grillage entrecroisé.

5. Un élément conducteur de chaleur selon la revendication 1, caractérisé en ce que le treillis (2) est un grillage fait d'éléments simplement croisés.

6. Un élément conducteur de chaleur selon la revendication 1, caractérisé en ce que la couche protectrice (3) représente un noyau dans la substance duquel le treillis (2) est noyé.

7. Un élément conducteur de chaleur selon la revendication 6, caractérisé en ce que une couche de revêtement (4) recouvre une surface au moins du corps de la cloison (3).

8. Un élément conducteur de chaleur selon la revendication 6, caractérisé en ce que la couche de revêtement (4) est poreuse.

9. Un élément conducteur de chaleur selon la revendication 2, et où la couche protectrice (3) fait office de mastic qui remplit les jours présentés par le treillis (2), ce dernier faisant saillie latérale (2A, 2B) d'un côté au moins du mastic enrobant (3) le treillis, afin d'offrir des surfaces bonnes conductrices de chaleur.

10. Un panneau d'échange calorifique caractérisé en ce qu'il comprend un noyau de treillis métallique conducteur calorifique (5), limité de chaque côté par des couches protectrices (4A, 4B) en matière plastique, de telle sorte qu'un canal longitudinal (6) permettant le passage d'un fluide est ménagé entre lesdites couches protectrices (4A, 4B), le treillis central (5) permettant l'écoulement longitudinal d'un fluide dans ledit canal (6) entre les couches protectrices (4A, 4B) et ayant des parties externes noyées dans les couches protectrices en plastique (4A, 4B), en sorte que la chaleur est transmise par le treillis (5) de la surface externe d'une des couches (4A, 4B) au canal (6), afin de permettre un échange calorifique avec le fluide qui s'y écoule.

11. Un panneau selon la revendication 10, caractérisé en ce que le treillis central est constitué par un grillage entrecroisé.

12. Un panneau selon la revendication 10, caractérisé en ce que l'une (4A) des couches protectrices (4A, 4B) est capable d'absorber l'énergie radiative de façon à permettre l'usage du panneau comme panneau de captage de l'énergie solaire.

**Patentansprüche**

1. Wärmeaustauschelement, das aus einem aus mehreren Komponenten bestehenden Wandelement besteht, das sich aus Komponenten verschiedener Wärmeleitfähigkeit zusammensetzt, wobei eine Komponente (2) von höherer Wärmeleitfähigkeit aus einem Geflecht von Metallstreifen oder Metallfasersträngen besteht, während eine weitere Wandkomponente (3) aus Plastikmaterial weniger hoher Wärmeleitfähigkeit eine umhüllende Schicht darstellt, charakterisiert dadurch, daß die genannte umhüllende Schicht (3) sich auf einer Ebene mit dem Metallgeflecht (2) befindet, wobei das Geflecht (2) in die Schicht (3) eingebettet liegt und das genannte Geflecht (2) eine transversale Ausdehnung hat, die groß genug ist, um Wärmetrans port durch das Geflecht von einer äußeren Oberfläche der umhüllenden Schicht (3) transversal durch die Schicht zur anderen äußeren Oberfläche der umhüllenden Schicht (3) zu ermöglichen.

2. Wärmeaustauschelement nach Anspruch 1, wobei das Metallgeflecht (2) aus Kupfer, Nickel, Aluminium oder Bronze besteht.

3. Wärmeaustauschelement nach Anspruch 1 oder 2, wobei das Plastikmaterial der umhüllenden Schicht (3) ein Urethan ist.

4. Wärmeaustauschelement nach Anspruch 1, wobei das Geflecht (2) die Form eines gewobenen Geflechts hat.

5. Wärmeaustauschelement nach Anspruch 1, wobei das Metallgeflecht (2) einfach über Kreuz gelegt ist.

6. Wärmeaustauschelement nach Anspruch 1, wobei die umhüllende Schicht (3) eine Kernschicht ist und das Geflecht (2) in sie eingebettet wird.

7. Wärmeaustauschelement nach Anspruch 6, wobei eine Deckschicht (4) auf mindestens eine Seite der Kernschicht (3) aufgebracht wird.

8. Wärmeaustauschelement nach Anspruch 6, wobei die Deckschicht (4) porös ist.

9. Wärmeaustauschelement nach Anspruch 2, wobei die umhüllende Schicht (3) eine Füllschicht ist, die die Zwischenräume im Geflecht (2) schließt, wobei das Geflecht seitlich (2A, 2B) an mindestens einer Seite aus der Füllschicht (3) herausragt, damit eine Oberfläche mit guten Wärmeleiteigenschaften entsteht.

10. Wärmeaustauschelement, charakterisiert dadurch, daß es aus einem wärmeleitenden Metallgeflecht als Kern (5) besteht, das auf beiden Seiten durch umhüllende Schichten (4A, 4B) aus Plastikmaterial gebunden ist, so daß sich zwischen de beiden umhüllenden Schichten (4A, 4B) ein longitudinaler Kanal für Flüssigkeiten (6) befindet, wobei der Kern aus Metallgeflecht (5) den longitudinalen Strom von Flüssigkeiten in genanntem Kanal (6) zwischen den umhüllenden Schichten (4A, 4B) erlaubt, wobei die äußeren Komponenten in die umhüllenden Schichten (4A, 4B) aus Plastik eingebettet sind, wodurch Wärme durch das Geflecht (5) von der äußeren Oberfläche einer Schicht (4A, 4B) in den Kanal (6) geleitet wird, wo ein Wärmeaustausch mit der darin fließenden Flüssigkeit stattfindet.

11. Element nach Anspruch 10, wobei der Kern aus Metallgeflecht ein gewobenes Geflecht ist.

12. Element nach Anspruch 10, wobei eine (4A) der umhüllenden Schichten (4A, 4B) Strahlungsenergie absorbieren kann, was die Nutzung dieses Elementes als Sonnenzelle ermöglicht.

0 000 992

Fig.1.

Fig.2.

Fig.3.

Fig.4.

Fig.5.

Fig.6.